# EUROPÄISCHE PATENTSCHRIFT

(11) **EP 1 079 123 B1**
(45) Veröffentlichungstag und Bekanntmachung des Hinweises auf die Patenterteilung: **13.10.2004**
(21) Anmeldenummer: 00113210.9
(22) Anmeldetag: 21.06.2000
(51) Int. Cl.: F16C 32/06, F16C 29/02

(54) **Fluiddrucklager**
Fluid bearing
Palier à fluide

(30) Priorität: 24.08.1999 DE 19940103
(43) Veröffentlichungstag der Anmeldung: 28.02.2001
(73) Patentinhaber: Carl Zeiss Industrielle Messtechnik GmbH, 73447 Oberkochen (DE)
(72) Erfinder: Enderle, Eckhard, 73434 Aalen-Dewangen (DE); Kaufmann, Dieter, 89520 Heidenheim (DE)
(74) Vertreter: Henckell, Carsten

(56) Entgegenhaltungen:
- DE-A- 19 603 218
- US-A- 3 137 530
- US-A- 4 045 098
- US-A- 4 449 834
- US-A- 4 560 213

## Beschreibung

Die Erfindung betrifft eine Lagervorrichtung mit wenigstens zwei Fluiddrucklagern, die eine als Tragseite ausgebildete Membran umfassen, die durch den Lagerdruck konkav verformt wird und einen Lagergrundkörper, der auf den beiden Fluiddrucklagern gelagert ist.

Derartige Lagervorrichtungen sind bereits seit langem bekannt.

Sie werden insbesondere an Maschinen eingesetzt, bei denen eine hochpräzise Lagerung notwendig ist, wie dies beispielsweise bei Koordinatenmeßgeräten der Fall ist. Die besagte hochpräzise Lagerung ist bei den besagten Fluiddrucklagern deshalb möglich, weil der Lagerspalt bei derartigen Fluiddrucklagern mit einer konkav verformbaren Membran, bedingt durch die Verformbarkeit der Membranen unabhängig von der Belastung des Lagers weitgehend konstant gehalten wird, was zu einer sehr hohen Steifigkeit des Lagers führt. Derartige Fluiddrucklager die in derartigen Lagervorrichtungen verwendet werden sind beispielsweise in der europäischen Patentschrift EP 0 065 337 B1, in der deutschen Offenlegungsschrift DE 41 25 802 A1 (Fig.4), in der europäischen Patentschrift EP 0 143 471 B1 oder in der deutschen Patentschrift DE 2544872 C2 beschrieben. Allen in den oben genannten Druckschriften genannten Fluiddrucklagern ist bis auf DE-A-4 125 802, Fig. 1-3 und 5, gemeinsam, daß diese auf der der Membran abgewandten Seite des Fluiddrucklagers eine Kugel aufweisen, auf der sich dann ein mit einem Innenkegel versehener Tragstift abstützt, so daß das Fluiddrucklager um den Stift herum drehbeweglich gelagert ist. Der Tragstift selber ist üblicherweise mit einem Gewinde versehen, das in den besagten Lagergrundkörper eingeschraubt ist, so daß zusätzlich die Höhe des Fluiddrucklagers gegenüber dem Lagergrundkörper verändert werden kann. Hierdurch ist es möglich an ein und demselben Lagergrundkörper eine Vielzahl von unterschiedlichen Fluiddrucklagern oben genannter Art zu befestigen, wobei die Fluiddrucklager einfach justiert werden können, indem einerseits durch Verdrehen der Tragstifte der Abstand des Fluiddrucklagers von dem Lagergrundkörper verändert wird und andererseits sich die betreffenden Lager durch die drehbewegliche Verbindung zum Tragstift an der Führungsfläche ausrichten.

Ein anderes Charakteristikum der aus den Druckschriften bekannten Fluiddrucklager mit Ausnahme der DE-2544872, Fig. 1, hierbei darin zu sehen, daß bei allen bekannten Fluiddrucklagern das Lagergehäuse derart ausgestaltet ist, daß die als Tragseite ausgebildete Membran und diejenige Seite des Lagergehäuses, auf dem sich der Lagergrundkörper über die besagte Kugel und den Tragstift abstützt, zwei unterschiedliche Bauteile sind.

Obwohl die bekannten Fluiddrucklager insbesondere bei Koordinatenmeßgeräten hervorragend funktionieren, hat sich gezeigt, daß die Steifigkeit der bislang bekannten Fluiddrucklager mit steigenden Qualitätsanforderungen an die Genauigkeit von Koordinatenmeßgeräten nicht mehr ausreichend ist.

Ausgehend vom allgemein bekannten Stand der Technik gemäß Oberbegriff des Anspruchs 1 liegt der Erfindung die Aufgabe zugrunde, eine Lagervorrichtung der bekannten Art anzugeben, mit der die Steifigkeit unter Verwendung oben genannter Fluiddrucklager erheblich gesteigert werden kann.

Die Aufgabe wird gemäß den Merkmalen des unabhängigen Anspruches 1 gelöst.

Die Besonderheit der erfindungsgemäßen Lagervorrichtung ist hierbei insbesondere darin zu sehen, daß wengistens eines der Fluiddrucklager ein einteilig ausgebildetes Lagergehäuse aufweist, das zumindest die Membran umfaßt und daß dieses Lagergehäuse unmittelbar mit dem Lagergrundkörper in Verbindung steht.

Hierdurch ergeben sich eine Reihe von erheblichen Vorteilen gegenüber den bislang bekannten Lagervorrichtungen. Durch die Tatsache, daß das einteilig ausgebildete Lagergehäuse unmittelbar mit dem Lagergrundkörper in Verbindung steht, ergibt sich eine erheblich größere Steifigkeit des gesamten Lagers, weil sowohl auf die besagte Kugel wie auch auf den Tragstift verzichtet werden kann und insbesondere diese Bauteile die Steifigkeit der gesamten Lagervorrichtung erheblich eingeschränkt haben. Da auf den Tragstift und die Kugel verzichtet werden kann, muß das Lager auch nicht mehr mittig gelagert werden sondern kann gleichfalls auch in seinen äußeren Randbereichen gelagert werden, was ebenfalls erheblich zur Stabilität des Lagers beiträgt. Da außerdem das Lagergehäuse nunmehr einteilig ist, ergeben sich selbstverständlich auch fertigungstechnisch und montagetechnisch erhebliche Vorteile, weil das Lagergehäuse in nur einem einzigen Fertigungsvorgang hergestellt werden kann und außerdem eine Montage zur Fertigstellung des Lagergehäuses vollständig vermieden werden kann.

Alle weiteren Fluiddrucklager können prinzipiell ebenfalls so ausgebildet sein, daß das Lagergehäuse mit dem Lagergrundkörper in Verbindung steht. Alternativ können die weiteren Fluiddrucklager oder Teile davon auch in herkömmlicher Weise ausgestaltet sein, was insbesondere dann Sinn macht, wenn die betreffenden Fluiddrucklager zum Gegenspannen verwendet werden.

An dieser Stelle soll der Begriff Lagergrundkörper eindeutig beschrieben werden. Bei dem besagten Lagergrundkörper handelt es sich um einen starren Körper der auf wenigstens zwei Fluiddrucklagern gelagert ist. Der Lagergrundkörper kann hierbei unterschiedlichste Formen annehmen. Er kann beispielsweise ein lokal beschränkter Körper sein, der speziell der Fixierung der Fluiddrucklager dient, wie dies in dem Ausführungsbeispiel der Figurenbeschreibung der Fall ist. Der Lagergrundkörper kann jedoch auch das gesamte zu lagernde Bauteil umfassen, was z.B. der Fall ist, wenn ein langgestrecktes Bauteil jeweils an seinen beiden Enden gelagert werden soll. Es versteht sich auch, daß der starre Lagergrundkörper nicht einteilig sein muß, sondern aus einer Vielzahl von Einzelteilen aufgebaut sein kann.

Zum Betrieb der Fluiddrucklager sind hierbei die unterschiedlichsten Fluide denkbar. So könnte beispielsweise Wasser oder Öl als Fluid verwendet werden. Besonders Vorteilhaft lassen sich jedoch Gase, wie insbesondere Luft einsetzen.

In einer ersten Ausflürungsform wird die Verbindung zwischen wenigstens einem der Lagergehäuse der Fluiddrucklager und dem Lagergrundkörper dadurch erzeugt, indem wenigstens ein Teil des starren Lagergrundkörpers und das Lagergehäuse wenigstens eines der Luftlager monolithisch aus einem Block gefertigt sind. Hierdurch ergibt sich bedingt dadurch, daß die Lagergehäuse und insbesondere die Membran, wie auch der Lagergrundkörper aus einem einzigen Teil bestehen der Vorteil, daß hierdurch zwischen dem Lagergrundkörper und der Membran ein besonders steifer Aufbau erzielt werden kann. Insbesondere auch hinsichtlich der Fertigungstechnik ergibt sich die Besonderheit, daß besonders effizient gefertigt werden kann, weil nunmehr auf die separate Herstellung des Lagergehäuses und des wenigstens einen Teils des Lagergrundkörpers, an dem das Lagergehäuse eingearbeitet wird, verzichtet werden kann.

In einer anderen Ausführungsform kann das einteilig ausgebildete Lagergehäuse auch ein gesondertes Bauteil sein, das neben der Membran einen Membranhalter aufweist und zur Verbindung zwischen dem Lagergehäuse und dem Lagergrundkörper der Lagergrundkörper unmittelbar auf dem Membranhalter gelagert ist.

In seiner einfachsten Version könnte diese grundsätzlich zweite Ausführungsform als Alternative zu dem monolithisch mit dem Lagergrundkörper gefertigten Lagergehäuse gesehen werden. Um das Lagergehäuse eindeutig zu fixieren könnte im Lagergrundkörper eine Aussparung vorgesehen sein, die entweder vollständig einen Boden oder aber zumindest einen Vorsprung aufweist, auf dem der Membranhalter des Lagergrundkörpers gelagert ist. Alternativ wäre selbstverständlich auch denkbar, den Membranhalter unmittelbar auf einer planen Fläche des Lagergrundkörpers zu lagern und diesen dann beispielsweise über Schrauben oder Paßstifte entsprechend gegen seitliches Verrutschen zu fixieren.

Besonders vorteilhaft läßt sich jedoch die besagte zweite Alternative weiterbilden, wenn der Membranhalter rund ausgestaltet ist und entweder das aufliegende Ende des Membranhalters kugelsegmentartig ausgebildet ist und der Boden bzw. der Vorsprung kegelstumpfartig ausgebildet ist, oder aber der Boden bzw. der Vorsprung kugelsegmentartig ausgebildet ist und das aufliegende Ende des Membranhalters kegelstumpfartig ausgebildet ist. Diese Ausführungsform bringt insbesondere den besonderen Vorteil mit sich, daß nunmehr einerseits das einteilig ausgebildete Lagergehäuse unmittelbar mit dem Lagergrundkörper in Verbindung steht und andererseits jedoch das Lagergehäuse drehbeweglich auf dem Lagergrundkörper gelagert ist und sich damit selbstjustierend verhält.

Die beiden verschiedenen Ausführungsvarianten, nämlich einmal die monolithische Fertigung des Lagergehäuses gemeinsam mit wenigstens einem Teil des Lagergrundkörpers und andererseits die Lagerung des Membranhalters des einteilig ausgebildeten Lagergehäuses auf dem Lagergrundkörper läßt sich insbesondere dann hervorragend kombinieren, wenn die Lagervorrichtung gleichzeitig auf wenigstens zwei parallelen aber gegeneinander geneigten Führungsflächen lagerbar ist. Für diesen Fall kann auf der ersten der beiden Führungsflächen dasjenige Fluiddrucklager gelagert werden, dessen Lagergehäuse gemeinsam mit wenigstens einem Teil des Lagergrundkörpers monolithisch aus einem Block gefertigt ist. Auf der anderen der beiden gegeneinander geneigten Führungsflächen sollte dann die besagte zweite Ausführungsform der erfindungsgemäßen Luftlager verwendet werden, dessen Lagergehäuse den besagten Membranhalter aufweist wobei der Lagergrundkörper auf dem Membranhalter des Lagergehäuses gelagert ist, da dieses Lager auf der zweiten Führungsfläche selbstjustierend ausgeführt werden kann, wie wir dies bereits oben beschrieben haben. Diese Kombination vereinfacht die Erstellung des Lagergrundkörpers ganz erheblich, da der Winkel, den die beiden gegeneinander geneigten Führungsflächen miteinander einschließen selbstverständlich auch hochgenau vom Lagergrundkörper eingehalten werden müßte, wenn auch die Fluiddrucklager der zweiten Führungsfläche ebenfalls monolithisch aus einem Teil des Lagergrundkörpers herausgearbeitet sein sollen. Da derartig genaue Winkel nur mit erheblichem fertigungstechnischen Aufwand erzielt werden können, ist es deshalb sehr sinnvoll die Lager der besagten zweiten Führungsfläche in oben beschriebener Weise als selbst justierende Lager auszuführen, auch wenn dies eine geringe Einbuße an Steifigkeit mit sich bringt.

Besonders vorteilhaft sind die besagten beiden Ausführungsformen der erfindungsgemäßen Lagervorrichtungen dann, wenn das Fluid direkt an der Fluideinlaßöffnung der Membranen zugeführt wird und dazu an der Membran eine Drossel befestigt ist, die durch eine Fluidzuführung gespeist wird. Hierdurch lassen sich für jedes einzelne Fluiddrucklager ganz individuell die Strömungsverhältnisse verändern, was insbesondere dann von besonderer Bedeutung ist, wenn mehrere Lagergehäuse von Fluiddrucklagern zusammen mit einem Teil des Lagergrundkörpers monolithisch aus einem Block gefertigt sind. So kann durch geeignete Wahl der Drosseln die gesamte Lagervorrichtung auf die Belastungsverhältnisse entsprechend eingestellt werden. Um insbesondere auch nachträglich nach der Fertigstellung des Lagergrundkörpers noch eine Möglichkeit zu haben, um die Fluiddrucklager entsprechend abzustimmen, sollte die Drossel auswechselbar am Lagergehäuse befestigt sein. Eine Möglichkeit wäre beispielsweise darin zu sehen, daß die Drossel in ein entsprechendes an der Membran vorgesehenes Gewinde eingeschraubt wird. Eine andere Möglichkeit könnte beispielsweise darin bestehen, diese einzustecken und über einen entsprechenden Schnapper festzuklemmen.

Besonders vorteilhaft ist es, wenn der Lagergrundkörper für wenigstens eines der Fluiddrucklager eine Durchbrechung aufweist, so daß das Lagergehäuse von der dem Lagergehäuse abgewandten Seite des Lagergrundkörpers aus zugänglich ist. Hierdurch ergibt sich der ganz besondere Vorteil, daß sogar nach der Montage der Lagervorrichtung auf der Führung ein Auswechseln der Drosseln möglich ist und somit auch zu diesem Zeitpunkt problemlos die Lager entsprechend abgestimmt werden können.

Weitere Vorteile und Weiterbildungen der Erfindung ergeben sich aus den Figuren.

Hierin zeigen:
- Figur 1: zeigt die wesentlichen Komponenten einer erfindungsgemäßen Lagervorrichtung in der Seitenansicht;
- Figur 2: zeigt das Teil (7) des Lagergrundkörpers (6) sowie das Fluiddrucklager (13) gemäß Figur 1 im Schnitt; und
- Figur 3: zeigt das Teil (8) des Lagergrundkörpers (6) sowie das Fluiddrucklager (14) im Schnitt.

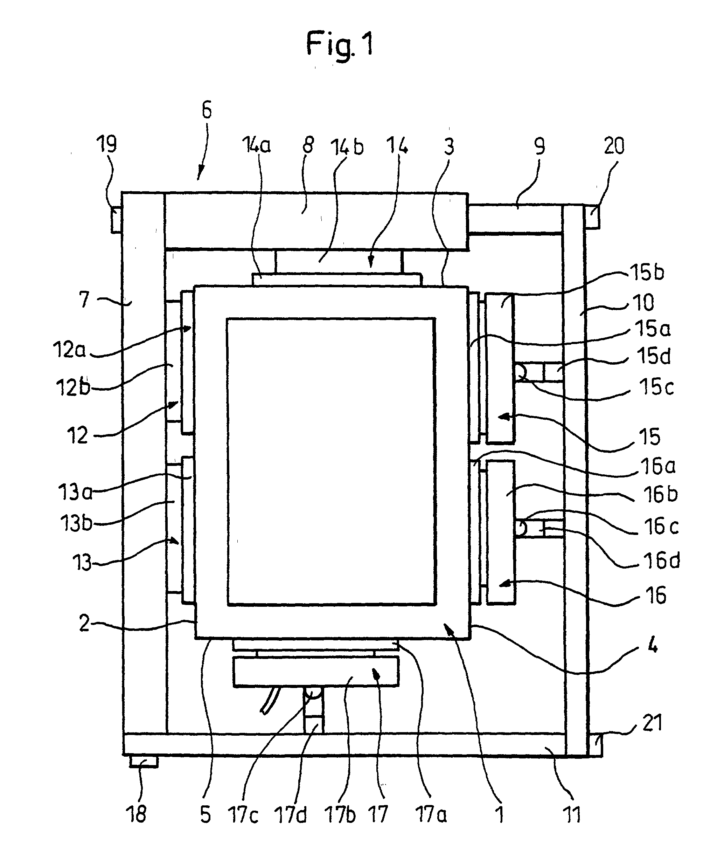

Figur 1 zeigt eine erfindungsgemäße Lagervorrichtung in rein schematischer Darstellung in der Seitenansicht, wobei die Darstellung lediglich die wesentlichen Komponenten der erfindungsgemäßen Lagervorrichtung zeigt und auf unwesentliche Details, wie beispielsweise die Luftzuführung usw. verzichtet wurde. Die erfindungsgemäße Lagervorrichtung gemäß Figur 1 soll nunmehr im Folgenden erläutert werden. Wie hierbei zu sehen ist, weist die Lagervorrichtung zunächst einmal ein Führungsprofil (1) auf, an dessen Seitenflächen vier rechtwinklig zueinander angeordnete Führungsflächen (2), (3), (4) und (5) angeordnet sind, auf denen Fluiddrucklager mit den Bezugszeichen (12, 13, 14. 15, 16 und 17) laufen. Die Fluiddrucklager (12, 13, 14, 15, 16 und 17) sind in dem hier gezeigten Ausführungsbeispiel alle als Luftlager ausgeführt, die mit Druckluft betrieben werden. Die Fluiddrucklager (12, 13, 14, 15, 16 und 17) lagern hierbei einen starren Lagergrundkörper (6) der aus Platten (7, 8, 10 und 11) und aus zwei hintereinander liegenden Stangen (9), von denen hier der Darstellung wegen nur die vordere Stange (9) zu sehen ist, aufgebaut wird. An die Stangen (9) ist hierbei auf der linken Seite ein Gewinde angeschnitten, welches in ein zugeordnetes Innengewinde der Platte (8) eingeschraubt ist. Ansonsten sind die Bauteile (10, 11, 7, 8 und 9) über die Schrauben (18, 19, 20, 21) sowie die entsprechende Anzahl von Schrauben, die hier aufgrund der Darstellung nicht sichtbar sind, miteinander zu einem starren Lagergrundkörper verschraubt. Bei den Fluiddrucklagern (15, 16, 17) handelt es sich um langjährig bekannte Luftlager mit einer als Tragseite ausgebildeten Membran, die durch den Lagerdruck konkav verformt wird, wie es beispielsweise im US-Patent 4,560,213 ausführlich beschrieben wurde. Die Lager (15, 16, 17) weisen hierbei, wie in dem Patent beschrieben ein Lagergehäuse (15b, 16b, 17b) auf, auf dem auf entsprechenden Kippstellen eine Membran (15a, 16a, 17a) gelagert ist. Auf dem Lagergehäuse (15b), (16b) und (17b) ist seinerseits eine Kugel (15c, 16c, 17c) vorgesehen, die ihrerseits auf einem Stift (15d, 16d, 17d) in einer kegelförmigen Ausnehmung gelagert ist. Die Stifte (15d, 16d, 17d) sind hierbei zweiteilig aufgebaut, wobei die beiden Teile jeweils durch eine Feder auseinander gedrückt werden, so daß die Fluiddrucklager (15, 16, 17) hierdurch gegen die Führungsflächen (4) und (5) gedrückt werden.

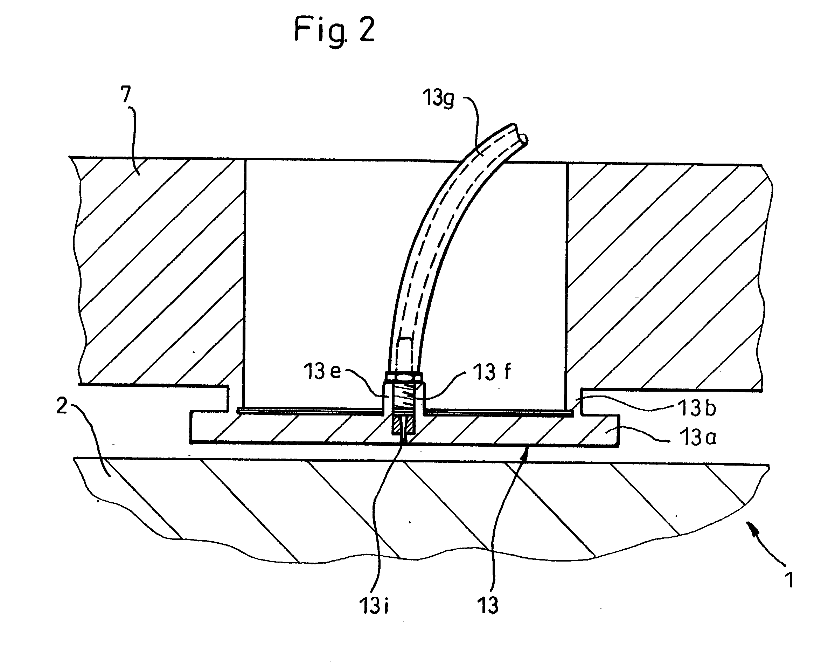

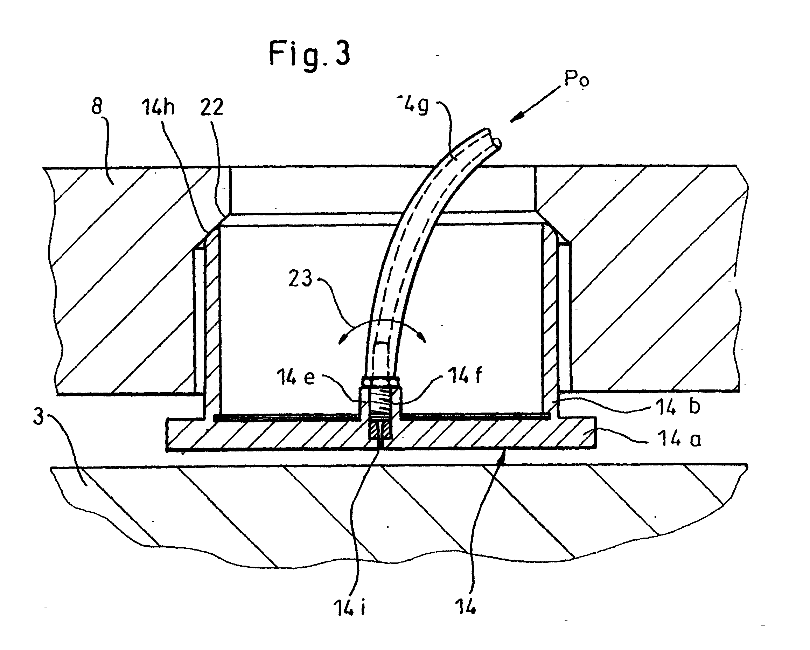

Bei den restlichen Fluiddrucklagern (12, 13, 14) handelt es sich im Gegensatz zu den Fluiddrucklagern (15, 16, 17) um die erfindungsgemäßen Fluiddrucklager, die in dem hier gezeigten Fall ebenfalls als mit Druckluft betriebene Luftlager ausgeführt sind. Diese Fluiddrucklager (12, 13, 14) sollen nunmehr im Zusammenhang mit Figuren 2 und 3 näher erläutert werden sollen. An der Platte (7) des Lagergrundkörpers (6) sind hierbei vier Fluiddrucklager befestigt, von denen hier nur die vorderen beiden Fluiddrucklager (12) und (13) zu sehen sind, während die dahinter liegenden beiden Fluiddrucklager bedingt durch die Sichtrichtung durch die Fluiddrucklager (12) und (13) verdeckt werden. Der genaue Aufbau der Fluiddrucklager (12) und (13) soll nunmehr detailliert anhand von Figur 2 erläutert werden, die ausschnittsweise einen Teil der Platte (7) und das Fluiddrucklager (13) sowie einen Teil des Führungsprofils (1) im Schnitt zeigt. Wie aus Figur 2 ersichtlich ist das Lagergehäuse (13a, 13b) des Fluiddrucklagers (13) einteilig ausgebildet und umfaßt neben einem Kipplager (13b) auch eine als Tragseite ausgebildete Membran (13a), die durch den Lagerdruck konkav verformt werden kann. Das Lagergehäuse (13a, 13b) ist wie aus Figur 2 ersichtlich gemeinsam mit der Platte (7) des starren Lagergrundkörpers (6) monolithisch aus einem einzigen Block gefertigt, was im übrigen auch für die anderen drei an der Platte (7) vorhandenen Fluiddrucklager gilt. Wie aus Figur 2 ersichtlich ist das Fluiddrucklager hierbei derart gefertigt, daß die Membran (13a) nur über das relativ schmale Kipplager (13b) mit der Platte (7) verbunden ist wobei das Kipplager auch im Inneren des Fluiddrucklagers noch einmal eine Nut aufweist, die zusätzlich die Dicke des Kipplagers (13b) im Bereich der Membran verkleinert. Natürlich könnte diese Nut auch am Außendurchmesser vorgesehen werden. Alternativ kann auf diese Nut auch verzichtet werden, wenn das Kipplager entsprechend dünnwandig ausgestaltet ist.

Hierdurch entsteht für die Membran (13a) ein Kipplager, um das die Membran bei ihrer konkaven Verformung ggfls. kippen kann. Im Bereich des Fluideinlasses wurde außerdem ein kleiner Stutzen (13e) mit einer Aussparung und einem Innengewinde vorgesehen, in dem eine Drossel (13f) auswechselbar eingeschraubt werden kann, so daß an der Fluideinlaßöffnung (13i) der Membran (13a) eine Drossel (13f) befestigt ist, die durch eine Fluidzuführung in Form eines Druckluftschlauches (13g) gespeist wird. Wie bereits oben detailliert ausgeführt, kann durch diese Maßnahme beliebig auch nach der Fertigstellung des Fluiddrucklagers (13) die Drossel (13f) gegen eine andere Drossel (13f) ausgetauscht werden, um hierdurch das Fluiddrucklager (13) entsprechend mit den anderen drei Fluiddrucklagern abzustimmen. Wie bereits oben ausgeführt, weist bei diesem Fluiddrucklager hier insbesondere fertigungsbedingt der Lagergrundkörper (6) bzw. im speziellen die Platte (7) eine Durchbrechung auf, so daß das Lagergehäuse (13a, 13b) von der dem Lagergehäuse (13a, 13b) abgewandten Seite des Lagergrundkörpers (6) aus zugänglich ist, so daß die Drossel (13f) auch nach der Montage der Lagervorrichtung auf dem Führungsprofil (1) ausgewechselt werden kann. Auf der zweiten Führungsfläche (3) (vergleiche wieder Figur 1) sind zwei hintereinander liegende erfindungsgemäße Lager geführt, die jedoch gemäß oben bereits beschriebener zweiter Ausführungsform ausgeführt sind. Von den beiden Lagern ist aufgrund der gewählten Ansicht hier ebenfalls nur das vordere Lager (14) zu sehen.

Der genaue Aufbau des Lagers (14) soll nunmehr anhand von Figur 3 beschrieben werden. in der Teile der Platte (8) des Lagergrundkörpers (6) und das Lager (14) im Schnitt dargestellt sind. Auch in dieser zweiten Ausführungsform ist das Lagergehäuse (14a, 14b) einteilig ausgebildet und umfaßt eine als Tragseite ausgebildete Membran (14a), die durch den Lagerdruck konkav verformt wird. Im Fall von Figur 3 ist jedoch das Lagergehäuse (14a, 14b) ein gesondertes Bauteil und unzusammenhängend vom starr ausgebildeten Lagergrundkörper (6) bzw. der Platte (8), mit der das Lagergehäuse (14a, 14b) in Verbindung steht, hergestellt. Das aus der Figur 2 bekannte Kipplager ist bei der Ausführungsform gemäß Figur 3 in Form eines ausgeprägten Membranhalters (14b) ausgebildet, wobei im Gegensatz zu Figur 2 der Lagergrundkörper (6) bzw. dessen Platte (8) unmittelbar auf dem Membranhalter gelagert ist. In diesem Fall ist der Membranhalter (14b) in einer in der Platte (8) vorgesehenen Aussparung auf einem entsprechenden Vorsprung (22) gelagert, wobei das aufliegende Ende (14h) des Membranhalters (14b) kugelsegmentartig ausgebildet ist und der Vorsprung (22) kegelstumpfartig ausgebildet ist, so daß das Lagergehäuse (14a, 14b) wie durch den Pfeil (23) angedeutet, drehbeweglich gegenüber dem Lagergrundkörper (6) bzw. dessen Platte (8) gelagert ist und es sich somit um ein selbst justierendes Lager handelt. Diese derartige Ausgestaltung weist den erheblichen Vorteil auf, daß, wie aus Figur 1 zu sehen ist, die Platte (8) des Lagergrundkörpers (6) gegenüber der Platte (7) des Lagergrundkörpers (6) nicht exakt dem Winkel der Führungsflächen (2) und (3) angepaßt sein muß, sondern daß der Winkel auch von dem Idealwinkel abweichen kann, so daß sich das Lagergehäuse (14a, 14b) durch seine drehbewegliche Lagerung selbsttätig ausrichten kann. Trotz der selbst justierenden Eigenschaften des Lagergehäuses (14a, 14b) steht das einteilig ausgeführte Lagergehäuse (14a, 14b) nichts desto Trotz in unmittelbarer Verbindung mit dem starren Lagerkörper (6) bzw. dessen Platte (8), so daß hierdurch dennoch eine vollkommen steife Verbindung vorhanden ist. Mithin zeigt die Lagervorrichtung gemäß Figur 1 also eine Lagervorrichtung, die gleichzeitig auf wenigstens zwei in ihren Richtungen parallelen aber gegeneinander geneigten Führungsflächen (2) und (3) lagerbar ist, wobei auf einer ersten (2) der beiden Führungsflächen (2) und (3) das besagte Luftlager (12) und (13) gelagert ist, dessen Lagergehäuse (12a, 12b) bzw. (13a, 13b) monolithisch mit wenigstens einem Teil (7) des Lagergrundkörpers (6) aus einem Block gefertigt ist und wobei auf der zweiten Führungsfläche (3) wenigstens ein Luftlager (14) gelagert ist, dessen Lagergehäuse den besagten Membranhalter (14) aufweist, wobei der Lagergrundkörper (6) bzw. dessen Platte (8) auf dem Membranhalter (14b) des Lagergehäuses (14a, 14b) gelagert ist.

## Patentansprüche

1. Lagervorrichtung umfassend
- wenigstens zwei Fluiddrucklager (12, 13, 14) mit jeweils einer als Tragseite ausgebildeten Membran (12a, 13a, 14a), die durch den Lagerdruck konkav verformt wird
- einen starr ausgebildeten Lagergrundkörper (6) der auf den beiden Fluiddrucklagern (12, 13, 14) gelagert ist,
**dadurch gekennzeichnet, daß**
- wenigstens eines der Fluiddrucklager ein einteilig ausgebildetes Lagergehäuse (12a, 12b; 13a, 13b; 14a, 14b) aufweist, das zumindest die Membran umfaßt und
- der Lagergrundkörper (6) unmittelbar mit dem Lagergehäuse (12a, 12b; 13a, 13b; 14a, 14b) in Verbindung steht.

2. Lagervorrichtung nach Anspruch 1, **dadurch gekennzeichnet, daß** wenigstens ein Teil (7) des starren Lagergrundkörpers (6) und das einteilig ausgebildete Lagergehäuse (12a, 12b; 13a, 13b) des besagten Fluiddrucklagers monolithisch aus einem Block gefertigt sind.

3. Lagergehäuse nach Anspruch 1, **dadurch gekennzeichnet, daß** das einteilig ausgebildete Lagergehäuse (14a, 14b) ein gesondertes Bauteil ist, das neben der Membran (14a) einen Membranhalter (14b) aufweist und zur Verbindung zwischen dem Lagergehäuse (14a, 14b) und dem Lagergrundkörper (6) der Lagergrundkörper unmittelbar auf dem Membranhalter (14b) gelagert ist.

4. Lagervorrichtung nach Anspruch 3, **dadurch gekennzeichnet, daß** der Membranhalter (14b) auf dem Vorsprung (22) oder dem Boden einer Aussparung des Lagergrundkörpers (6) gelagert ist.

5. Lagervorrichtung nach Anspruch 4, **dadurch gekennzeichnet, daß** der Membranhalter (14b) rund ist und entweder
- das aufliegende Ende des Membranhalters (14h) kugelsegmentartig ausgebildet ist und der Boden bzw. der Vorsprung (22) kegelstumpfartig ausgebildet ist oder
- der Boden bzw. der Vorsprung (22) kugelsegmentartig ausgebildet ist und das aufliegende Ende des Membranhalters (14h) kegelstumpfartig ausgebildet ist.

6. Lagervorrichtung nach Anspruch 2 in Verbindung mit Ansprüchen 3-5, **dadurch gekennzeichnet, daß** die Lagervorrichtung gleichzeitig auf wenigstens zwei in ihren Richtungen parallelen aber gegeneinander geneigten Führungsflächen (2,3) lagerbar ist, wobei auf einer der beiden Führungsflächen (2) das besagte Fluiddrucklager (12,13) gelagert ist, dessen Lagergehäuse monolithisch mit wenigstens einem Teil (7) des Lagergrundkörpers (6) aus einem Block gefertigt ist und wobei auf der zweiten Führungsfläche (3) wenigstens ein Fluiddrucklager (14) gelagert ist, dessen Lagergehäuse (14a, 14b) besagten Membranhalter aufweist, wobei der Lagergrundkörper auf dem Membranhalter des Lagergehäuses gelagert ist.

7. Lagervorrichtung nach Ansprüchen 1-6, **dadurch gekennzeichnet, daß** an der Fluideinlaßöffnung (13i, 14i) eine Drossel (13f, 14f) befestigt ist, die durch eine Fluidzuführung (13g, 14g) gespeist wird.

8. Lagervorrichtung nach Anspruch 7, **dadurch gekennzeichnet, daß** die Drossel auswechselbar befestigt ist.

9. Lagervorrichtung nach Anspruch 8, **dadurch gekennzeichnet, daß** die Drossel in ein entsprechendes Gewinde in der Membran eingeschraubt ist.

10. Lagervorrichtung nach Anspruch 1-9, **dadurch gekennzeichnet, daß** der Lagergrundkörper für wenigstens eines der Fluiddrucklager eine Durchbrechung aufweist, so daß das Lagergehäuse von der dem Lagergehäuse abgewandten Seite des Lagergrundkörpers aus zugänglich ist.

## Claims

1. Bearing device, comprising
- at least two fluid-pressure bearings (12, 13, 14), in each case with a diaphragm (12a, 13a, 14a) which is designed as a carrying side and which is deformed concavely by the bearing pressure,
- a rigidly designed basic bearing body (6) which is mounted on the two fluid-pressure bearings (12, 13, 14),
**characterized in that**
- at least one of the fluid-pressure bearings has a bearing housing (12a, 12b; 13a, 13b; 14a, 14b) of one-part design, which comprises at least the diaphragm, and
- the basic bearing body (6) is connected directly to the bearing housing (12a, 12b; 13a, 13b; 14a, 14b).

2. Bearing device according to Claim 1, **characterized in that** at least part (7) of the rigid basic bearing body (6) and the bearing housing (12a, 12b; 13a, 13b) of one-part design of the said fluid-pressure bearing are manufactured monolithically from a block.

3. Bearing housing according to Claim 1, **characterized in that** the bearing housing (14a, 14b) of one-part design is a separate component which has a diaphragm holder (14b) in addition to the diaphragm (14a), and, for connection between the bearing housing (14a, 14b) and the basic bearing body (6), the basic bearing body is mounted directly on the diaphragm holder (14b).

4. Bearing device according to Claim 3, **characterized in that** the diaphragm holder (14b) is mounted on the projection (22) or the bottom of a recess of the basic bearing body (6).

5. Bearing device according to Claim 4, **characterized in that** the diaphragm holder (14b) is round, and either
- the bearing end (14h) of the diaphragm holder is designed in the manner of a spherical segment and the bottom or projection (22) is designed in the manner of a cone frustum or
- the bottom or projection (22) is designed in the manner of a spherical segment and the bearing end (14h) of the diaphragm holder is designed in the manner of a cone frustum.

6. Bearing device according to Claim 2 in conjunction with Claims 3-5, **characterized in that** the bearing device can be mounted simultaneously on at least two guide surfaces (2, 3) parallel in their directions, but inclined relative to one another, one of the two guide surfaces (2) having mounted on it the said fluid-pressure bearing (12, 13), the bearing housing of which is manufactured monolithically with at least part (7) of the basic bearing body (6) from a block, and the second guide surface (3) having mounted on it at least one fluid-pressure bearing (14), the bearing housing (14a, 14b) of which has the said diaphragm holder, the basic bearing body being mounted on the diaphragm holder of the bearing housing.

7. Bearing device according to Claims 1-6, **characterized in that** a throttle (13f, 14f), which is fed by means of a fluid supply (13g, 14g), is fastened to the fluid inlet orifice (13i, 14i).

8. Bearing device according to Claim 7, **characterized in that** the throttle is fastened exchangeably.

9. Bearing device according to Claim 8, **characterized in that** the throttle is screwed into a corresponding thread in the diaphragm.

10. Bearing device according to Claims 1-9, **characterized in that** the basic bearing body has a perforation for at least one of the fluid-pressure bearings, so that the bearing housing is accessible from that side of the basic bearing body which faces away from the bearing housing.

## Revendications

1. Dispositif de palier comprenant :
- au moins deux paliers à fluide (12, 13, 14) comprenant chacun une membrane (12a, 13a, 14a) réalisée sous forme de côté porteur, qui est déformée de manière concave par la pression du palier,
- un corps de base de palier (6) réalisé rigidement, qui est monté sur les deux paliers à fluide (12, 13, 14),
**caractérisé en ce que**
- au moins l'un des paliers à fluide présente un carter à fluide réalisé d'une seule pièce (12a, 12b ; 13a, 13b ; 14a, 14b), qui comprend au moins la membrane et
- le corps de base de palier (6) est en liaison directe avec le carter de palier (12a, 12b ; 13a, 13b ; 14a, 14b).

2. Dispositif de palier selon la revendication 1, **caractérisé en ce qu'**au moins une partie (7) du corps de base de palier rigide (6) et le carter de palier réalisé d'une seule pièce (12a, 12b ; 13a, 13b) dudit palier à fluide sont fabriqués de manière monolithique en un seul bloc.

3. Dispositif de palier selon la revendication 1, **caractérisé en ce que** le carter de palier réalisé d'une seule pièce (14a, 14b) est un composant séparé qui présente en plus de la membrane (14a) un support de membrane (14b) et **en ce que** le corps de base de palier est monté directement sur le support de membrane (14b) pour la connexion entre le carter de palier (14a, 14b) et le corps de base de palier (6).

4. Dispositif de palier selon la revendication 3, **caractérisé en ce que** le support de membrane (14b) est monté sur la saillie (22) ou le fond d'un évidement du corps de base de palier (6).

5. Dispositif de palier selon la revendication 4, **caractérisé en ce que** le support de membrane (14b) est rond et soit
- l'extrémité en applique du support de membrane (14h) est réalisée en forme de segment de sphère et le fond ou la saillie (22) est réalisé(e) en forme de cône tronqué, soit
- le fond ou la saillie (22) est réalisé(e) en forme de segment de sphère et l'extrémité en applique du support de membrane (14h) est réalisée en forme de cône tronqué.

6. Dispositif de palier selon la revendication 2 en liaison avec les revendications 3 à 5, **caractérisé en ce que** le dispositif de palier peut être monté simultanément sur au moins deux surfaces de guidage (2, 3) d'orientation parallèle mais inclinées l'une par rapport à l'autre, ledit palier à fluide (12, 13) dont le carter de palier est fabriqué en un seul bloc de manière monolithique avec au moins une partie (7) du corps de base de palier (6), étant monté sur l'une des deux surfaces de guidage (2), et au moins un palier à fluide (14) dont le carter de palier (14a, 14b) présente ledit support de membrane, étant monté sur la deuxième surface de guidage (3), le corps de base de palier étant monté sur le support de membrane du carter de palier.

7. Dispositif de palier selon les revendications 1 à 6, **caractérisé en ce qu'**un étranglement (13f, 14f) est fixé sur l'ouverture d'entrée de fluide (13i, 14i), lequel est alimenté par une alimentation en fluide (13g, 14g).

8. Dispositif de palier selon la revendication 7, **caractérisé en ce que** l'étranglement est fixé de manière remplaçable.

9. Dispositif de palier selon la revendication 8, **caractérisé en ce que** l'étranglement est vissé dans un filetage correspondant dans la membrane.

10. Dispositif de palier selon les revendications 1 à 9, **caractérisé en ce que** le corps de base de palier présente pour au moins l'un des paliers à fluide une interruption de sorte que le carter de palier soit accessible depuis le côté du corps de base de palier opposé au carter de palier.
